# EUROPÄISCHE PATENTSCHRIFT

(11) **EP 2 265 418 B1**
(45) Veröffentlichungstag und Bekanntmachung des Hinweises auf die Patenterteilung: **31.07.2013**
(21) Anmeldenummer: 08873230.0
(22) Anmeldetag: 18.11.2008
(51) Int. Cl.: B25D 17/24, F16F 7/116

(54) **HANDWERKZEUGMASCHINE**
HAND-HELD POWER TOOL
OUTIL MOTORISÉ MANUEL

(30) Priorität: 12.03.2008 DE 102008000625
(43) Veröffentlichungstag der Anmeldung: 29.12.2010
(73) Patentinhaber: Robert Bosch GmbH, 70442 Stuttgart (DE)
(72) Erfinder: HECHT, Joachim, 71106 Magstadt (DE); SCHLESAK, Gerd, 71732 Tamm (DE); LENNARTZ, Juergen, 73760 Ostfildern (DE); HOLST, Stefan, 89073 Ulm (DE); KUESPERT, Klaus, 70771 Leinfelden-Echterdingen (DE)
(86) Internationale Anmeldenummer: PCT/EP2008/065705
(87) Internationale Veröffentlichungsnummer: WO 2009/112098

(56) Entgegenhaltungen:
- WO-A-2007/102449
- DE-C- 815 179
- JP-A- 52 109 673
- US-A- 3 028 841
- DATABASE WPI Week 198838 Thomson Scientific, London, GB; AN 1988-269098 XP002514129 -& SU 1 377 482 A (NIKOLAEV SHIP-BUILD) 28. Februar 1988 (1988-02-28)

## Beschreibung

### Stand der Technik

Die Erfindung geht aus von einer Handwerkzeugmaschine nach dem Oberbegriff des Anspruchs 1, und wie aus der JP 52-109673 A bekannt.

Es ist bereits eine Handwerkzeugmaschine mit einer Schwingungsdämpfungseinheit bekannt. Die Schwingungsdämpfungseinheit weist eine erste Tilgermasseneinheit mit einer ersten Schwingungsdämpfungsrichtung und eine zweite Tilgermasseneinheit mit einer zweiten Schwingungsdämpfungsrichtung auf.

### Vorteile der Erfindung

Gemäß dem Anspruch 1 geht die Erfindung aus von einer Handwerkzeugmaschine, insbesondere ein Bohr- und/oder Meißelhammer, mit einer Schwingungsdämpfungseinheit, die eine erste Tilgermasseneinheit mit einer ersten Schwingungsdämpfungsrichtung und zumindest eine zweite Tilgermasseneinheit mit einer zweiten Schwingungsdämpfungsrichtung aufweist.

Es wird vorgeschlagen, dass die erste Schwingungsdämpfungsrichtung der ersten Tilgermasseneinheit im Wesentlichen parallel zur zweiten Schwingungsdämpfungsrichtung der zweiten Tilgermasseneinheit ausgerichtet ist. In diesem Zusammenhang soll unter einer "Tilgermasseneinheit" insbesondere eine Einheit mit zumindest einem Tilgermassenelement und einem elastischen Element verstanden werden, wobei das Tilgermassenelement zumindest innerhalb eines vorgesehenen Frequenzbereichs einer von außerhalb der Tilgermasseneinheit auf das Tilgermassenelement einwirkenden Ausgangsschwingung und/oder einer Erregerschwingung eines Schwingungssystems, insbesondere der Handwerkzeugmaschine, zu einer Gegenschwingung angeregt wird, die der Ausgangsschwingung bzw. der Erregerschwingung des Schwingungssystems vorzugsweise Schwingungsenergie entzieht und somit zu einer Reduzierung von Schwingungen des Schwingungssystems beiträgt. Das elastische Element kann hierbei von einem Elastomerelement, einer elastischen Feder, insbesondere einer Blattfeder, einer Spiralfeder und/oder einer Schraubenfeder, einer Gasfeder usw. gebildet sein. Weiterhin soll unter einer "Schwingungsdämpfungsrichtung" insbesondere eine Richtung verstanden werden, entlang derer die Tilgermasseneinheit zu einer Schwingungsdämpfung vorgesehen ist und/oder die von einer Vorzugsrichtung einer Schwingungsdämpfung der Tilgermasseneinheit gebildet ist. Ferner soll unter "im Wesentlichen parallel ausgerichtet" insbesondere verstanden werden, dass die erste Schwingungsdämpfungsrichtung der ersten Tilgermasseneinheit zu der zweiten Schwingungsdämpfungsrichtung der zweiten Tilgermasseneinheit einen maximalen Winkel von ± 12°, besonders vorteilhaft einen maximalen Winkel von 8° und besonders bevorzugt einen maximalen Winkel von ± 3° einschließt. Durch die erfindungsgemäße Ausgestaltung kann vorteilhaft eine Schwingungsreduktion im Betrieb der Handwerkzeugmaschine über einen breiten Frequenzbereich der Schwingung realisiert werden und damit ein hoher Bedienkomfort für einen Bediener der Handwerkzeugmaschine erreicht werden.

Des Weiteren wird vorgeschlagen, dass eine Schwingungseigenfrequenz der ersten Tilgermasseneinheit unterschiedlich zu einer Schwingungseigenfrequenz der zweiten Tilgermasseneinheit ausgebildet ist. Hierbei soll unter einer "Schwingungseigenfrequenz" insbesondere eine Frequenz einer der Tilgermasseneinheiten verstanden werden, mit der nach vorzugsweise einmaliger Anregung der Tilgermasseneinheit die Tilgermasseneinheit bzw. eine Tilgermasse der Tilgermasseneinheit schwingen kann. Vorzugsweise ist ein Wert der Schwingungseigenfrequenz eines Schwingungssystems, insbesondere der Tilgermasseneinheit, von einer Masse, insbesondere einer Tilgermasse, und/oder einer Federkonstante eines elastischen Elements abhängig. Es können hierbei die Schwingungseigenfrequenzen der Tilgermasseneinheiten auf ein Schwingungsverhalten im Betrieb der Handwerkzeugmaschine abgestimmt sein. Vorzugsweise liegt eine zu erwartende Schwingungsamplitude der Handwerkzeugmaschine zwischen einer kleinsten und einer größten Schwingungseigenfrequenz der zumindest zwei Tilgermasseneinheiten. Mittels der Realisierung von unterschiedlichen Schwingungseigenfrequenzen der beiden Tilgermasseneinheiten kann vorteilhaft eine Reduktion von Schwingungen über einen großen Frequenzbereich effektiv erreicht werden.

Des Weiteren wird vorgeschlagen, dass die zumindest zwei Tilgermasseneinheiten entlang einer Schwingungsdämpfungsrichtung nacheinander angeordnet sind . Hierdurch kann eine insbesondere Platz sparende, kompakte Anordnung der zumindest zwei Tilgermasseneinheiten erreicht werden, indem eine bauliche Anordnung der Schwingungsdämpfungseinheit vorteilhaft an eine Bauweise, insbesondere an eine Form, der Handwerkzeugmaschine angepasst werden kann.

Weisen hierbei die beiden Schwingungseigenfrequenzen eine Differenz von maximal 15 %, so wird eine effektive und leicht herzustellende Ausführung der beiden Tilgermasseneinheiten erreicht. Eine besonders wirkungsvolle und doch noch kostengünstig herstellbare Schwingungsreduktion wird erreicht, wenn eine Differenz der beiden Schwingungseigenfrequenzen von maximal 10 % eingehalten wird. Liegt eine Differenz der beiden Schwingungseigenfrequenzen zwischen 5 % und maximal 10 %, wird die wirkungsvollste Ausführung einer Schwingungsdämpfung erzielt.

Sind die zumindest zwei Tilgermasseneinheiten entkoppelt zueinander angeordnet, kann jede der Tilgermasseneinheiten im Bereich der Schwingungseigenfrequenz zu einer Reduktion von Schwingungen bzw. zu einer Schwingungsdämpfung im Betrieb der Handwerkzeugmaschine vorteilhaft beitragen und damit ein breites Schwingungsdämpfungsspektrum aufrechterhalten werden. Zudem können unerwünschte Beeinflussungen bzw. Auswirkungen zwischen den einzelnen Tilgermasseneinheiten wirkungsvoll verhindert werden. In diesem Zusammenhang soll unter "entkoppelt" insbesondere verstanden werden, dass die zumindest zwei Tilgermasseneinheiten hinsichtlich einer Übertragung und/oder eines Austauschs einer Kraft und/oder einer Energie voneinander getrennt angeordnet sind.

Zudem wird vorteilhaft vorgeschlagen, dass die Schwingungsdämpfungsrichtung zumindest einer Tilgermasseneinheit im Wesentlichen parallel zu einer Arbeitsrichtung ausgerichtet ist, wodurch vorteilhaft Schwingungsimpulse, die während eines Betriebs der Handwerkzeugmaschine erzeugt werden, bevorzugt gedämpft werden können. Grundsätzlich ist auch eine zu der Arbeitsrichtung unterschiedliche Ausrichtung der Schwingungsdämpfungsrichtung möglich. Die Arbeitsrichtung ist vorzugsweise von einer Richtung gebildet, entlang derer eine Kraft insbesondere auf ein Werkzeug übertragbar ist, wie beispielsweise von einer Schlagrichtung eines Schlagwerks.

Es wird ferner vorteilhaft vorgeschlagen, dass zumindest eine der Tilgermasseneinheiten zumindest ein Tilgermassenelement und zwei elastische Elemente aufweist und das Tilgermassenelement entlang der Schwingungsdämpfungsrichtung zumindest teilweise zwischen den zwei elastischen Elementen angeordnet ist, wodurch vorteilhaft eine schwingende Lagerung des Tilgermassenelements konstruktiv einfach erreicht werden kann. Vorzugsweise ist das Tilgermassenelement aus einem Metall gebildet. Besonders vorteilhaft ist hierbei zumindest ein elastisches Element von einem Federelement, insbesondere einer Schraubenfeder, gebildet.

Des Weiteren wird vorteilhalf vorgeschlagen, dass zumindest eine der zumindest zwei Tilgermasseneinheiten zumindest ein Führungselement zu einer Führung eines Tilgermassenelements entlang einer Schwingungsdämpfungsrichtung aufweist, wodurch eine besonders verschleißarme Schwingungsdämpfung erreicht werden kann. Zudem kann eine Schwingungsbewegung bei einer von außen einwirkenden Schwingungsanregung entlang einer Vorzugsrichtung, insbesondere entlang der Schwingungsdämpfungsrichtung, durch das Führungselement geleitet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße, von einem Bohrhammer gebildete Handwerkzeugmaschine mit einer Schwingungsdämpfungseinheit in einer schematischen Darstellung,
- Fig. 2: die Schwingungsdämpfungseinheit mit zwei Tilgermasseneinheiten in einer schematischen Darstellung und
- Fig. 3: die Handwerkzeugmaschine mit einer zu Figur 1 alternativen Anordnung der Schwingungsdämpfungseinheit in einer schematischen Darstellung.

### Beschreibung der Ausführungsbeispiele

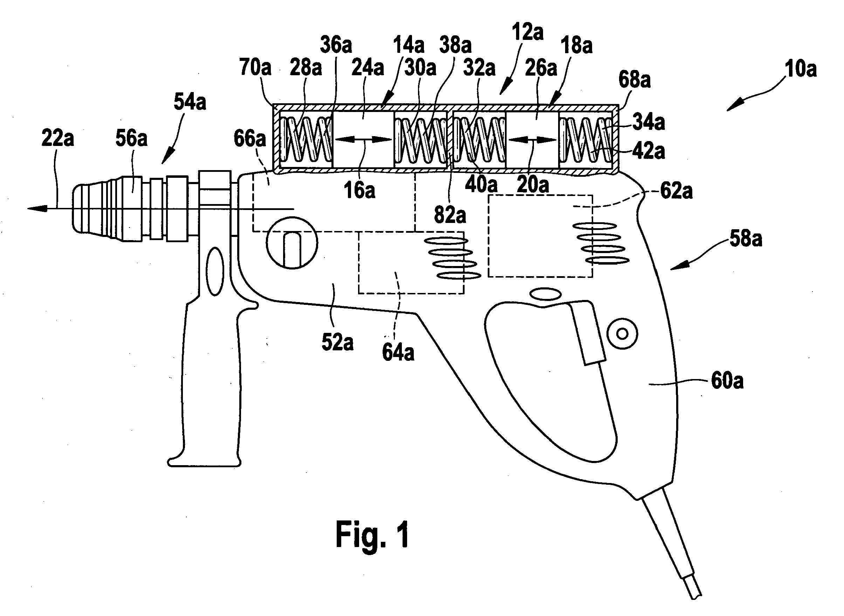

In Figur 1 ist eine von einem Bohrhammer gebildete, erfindungsgemäße Handwerkzeugmaschine 10a dargestellt. Die Handwerkzeugmaschine 10a umfasst ein Gehäuse 52a und in einem Frontbereich 54a eine Werkzeugaufnahme 56a zu einer Aufnahme eines nicht näher dargestellten Werkzeugs. An einer dem Frontbereich 54a abgewandten Seite 58a umfasst die Handwerkzeugmaschine 10a einen Haupthandgriff 60a zu einem Betätigen der Handwerkzeugmaschine 10a und zu einer Kraftübertragung von einem Bediener auf die Handwerkzeugmaschine 10a. Zu einer Erzeugung eines Drehmoments weist die Handwerkzeugmaschine 10a eine von einem Elektromotor gebildete Antriebseinheit 62a auf. Das von einem Antriebsmoment gebildete Drehmoment der Antriebseinheit 62a wird über eine Getriebevorrichtung 64a der Handwerkzeugmaschine 10a auf eine pneumatische Schlageinheit 66a und/oder auf ein rotierendes, von einem Hammerrohr gebildetes Abtriebsmittel übertragen. In einem Schlagbetrieb der Handwerkzeugmaschine 10a wird durch die Schlageinheit 66a ein Schlagimpuls generiert und auf das Werkzeug übertragen.

Des Weiteren weist die Handwerkzeugmaschine 10a eine Schwingungsdämpfungseinheit 12a auf, die zu einer Dämpfung von Schwingungen vorgesehen ist, die im Betrieb der Handwerkzeugmaschine 10a von der Schlageinheit 66a auf das Gehäuse 52a und/oder auf weitere Bauteile der Handwerkzeugmaschine 10a übertragbar sind. Die Schwingungsdämpfungseinheit 12a ist von dem Gehäuse 52a der Handwerkzeugmaschine 10a umgeben und weist eine erste Tilgermasseneinheit 14a mit einer ersten Schwingungsdämpfungsrichtung 16a und eine zweite Tilgermasseneinheit 18a mit einer zweiten Schwingungsdämpfungsrichtung 20a auf. Die erste Tilgermasseneinheit 14a ist zu einer Schwingungsdämpfung entlang der ersten Schwingungsdämpfungsrichtung 16a und die zweite Tilgermasseneinheit 18a zu einer Schwingungsdämpfung entlang der zweiten Schwingungsdämpfungsrichtung 20a vorgesehen. Die erste Schwingungsdämpfungsrichtung 16a der ersten Tilgermasseneinheit 14a ist dabei im Wesentlichen parallel zur zweiten Schwingungsdämpfungsrichtung 20a der zweiten Tilgermasseneinheit 18a angeordnet. Die beiden Tilgermasseneinheiten 14a, 18a sind entlang der Schwingungsdämpfungsrichtungen 16a, 20a nacheinander angeordnet. Grundsätzlich können die Tilgermasseneinheiten 14a, 18a in einer weiteren Ausgestaltung der Erfindung auch entlang einer senkrecht zu den Schwingungsdämpfungsrichtungen 16a, 20a verlaufenden Richtung nacheinander mit im Wesentlichen parallel ausgerichteten Schwingungsdämpfungsrichtungen 16a, 20a angeordnet sein.

Die beiden Tilgermasseneinheiten 14a, 18a bzw. die beiden Schwingungsdämpfungsrichtungen 16a, 20a sind ferner im Wesentlichen parallel zu einer Arbeitsrichtung 22a der Handwerkzeugmaschine 10a ausgerichtet. Die Arbeitsrichtung 22a ist hierbei von einer Schlagrichtung der Schlageinheit 66a gebildet, so dass die Schwingungsdämpfungseinheit 12a bzw. die beiden Tilgermasseneinheiten 14a, 18a zu einer Reduktion einer Schwingungsbewegung entlang einer Vorzugsrichtung einer Schwingungsausbreitung, die von der Schlagrichtung gebildet ist, im Betrieb der Handwerkzeugmaschine 10a beiträgt bzw. beitragen.

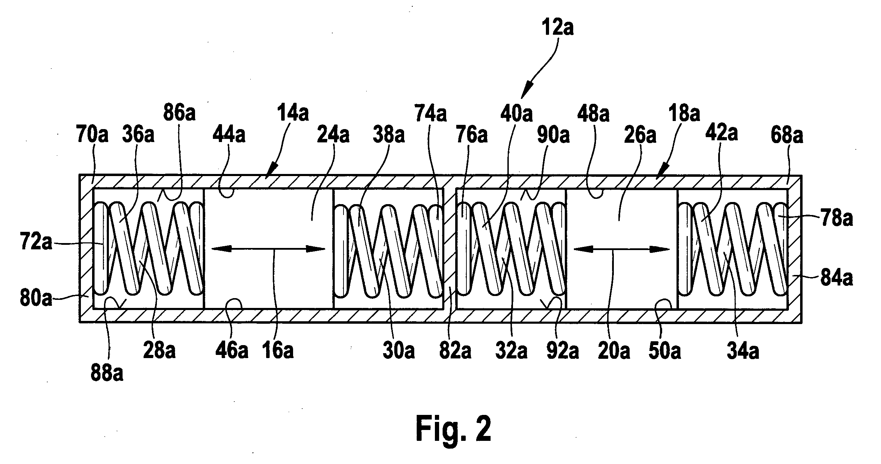

Zudem sind die beiden Tilgermasseneinheiten 14a, 18a entkoppelt zueinander angeordnet. Hierzu weist jede der beiden Tilgermasseneinheiten 14a, 18a ein eigenes Tilgermassengehäuse 68a, 70a auf. Des Weiteren weisen die beiden Tilgermasseneinheiten 14a, 18a jeweils ein von einem Metall gebildetes Tilgermassenelement 24a, 26a und jeweils zwei elastische Elemente 28a, 30a, 32a, 34a auf, die jeweils von einem Federelement 36a, 38a, 40a, 42a gebildet sind (Figur 1 und 2). Die Tilgermassenelemente 24a, 26a sind jeweils zwischen den beiden Federelementen 36a, 38a, 40a, 42a entlang der Schwingungsdämpfungsrichtungen 16a, 20a angeordnet, wobei jeweils ein dem Tilgermassenelement 24a, 26a abgewandtes Ende 72a, 74a, 76a, 78a der Federelemente 36a, 38a, 40a, 42a entlang der Schwingungsdämpfungsrichtungen 16a, 20a an dem Tilgermassengehäuse 68a, 70a bzw. einer festen Wandung 80a, 82a, 84a des Tilgermassengehäuses 68a, 70a angeordnet bzw. abgestützt ist (vgl. Figur 2).

Die beiden Tilgermasseneinheiten 14a, 18a weisen jeweils eine Schwingungseigenfrequenz auf, die jeweils von Eigenschaften der Tilgermassenelemente 24a, 26a und von Eigenschaften der Federelemente 36a, 38a, 40a, 42a abhängig sind. Die Schwingungseigenfrequenz der ersten Tilgermasseneinheit 14a ist zu einer Erzielung eines breiten, von einem Dämpfungsspektrum gebildeten Frequenzspektrums unterschiedlich zu der Schwingungseigenfrequenz der zweiten Tilgermasseneinheit 18a ausgebildet. Die beiden Schwingungseigenfrequenzen weisen hierbei eine Differenz zwischen 5 % und maximal 10 % zueinander auf, wobei die Schwingungseigenfrequenzen der ersten und der zweiten Tilgermasseneinheit 14a, 18a an ein Schwingungsverhalten der Handwerkzeugmaschine 10a bzw. der Schlageinheit 66a der Handwerkzeugmaschine 10a angepasst sind. Hierbei liegt ein Arbeitspunkt der Handwerkzeugmaschine 10a vorteilhaft zwischen einem größten Wert einer der beiden Schwingungseigenfrequenzen und einem kleinsten Wert einer der beiden Schwingungseigenfrequenzen.

Des Weiteren weisen die Tilgermasseneinheiten 14a, 18a jeweils zwei Führungselemente 44a, 46a, 48a, 50a zu einer Führung des Tilgermassenelements 24a, 26a auf. Die Führungselemente 44a, 46a, 48a, 50a sind an einer nach innen weisenden Oberfläche 86a, 88a, 90a, 92a der Tilgermassengehäuse 68a, 70a angeordnet. Die Führungselemente 44a, 46a, 48a, 50a sind hierbei entlang der Schwingungsdämpfungsrichtung 16a, 20a an der nach innen weisenden Oberfläche 86a, 88a, 90a, 92a angeordnet. Zudem sind jeweils die beiden Führungselemente 44a, 46a, 48a, 50a einer der Tilgermasseneinheiten 14a, 18a einstückig mit dem Tilgermassengehäuse 68a, 70a bzw. der nach innen weisenden Oberfläche 86a, 88a, 90a, 92a ausgebildet. Die Führungselemente 44a, 46a, 48a, 50a können hierbei in Form von Führungsschienen und/oder weiteren, dem Fachmann als sinnvoll erscheinenden Führungselementen 44a, 46a, 48a, 50a ausgebildet sein.

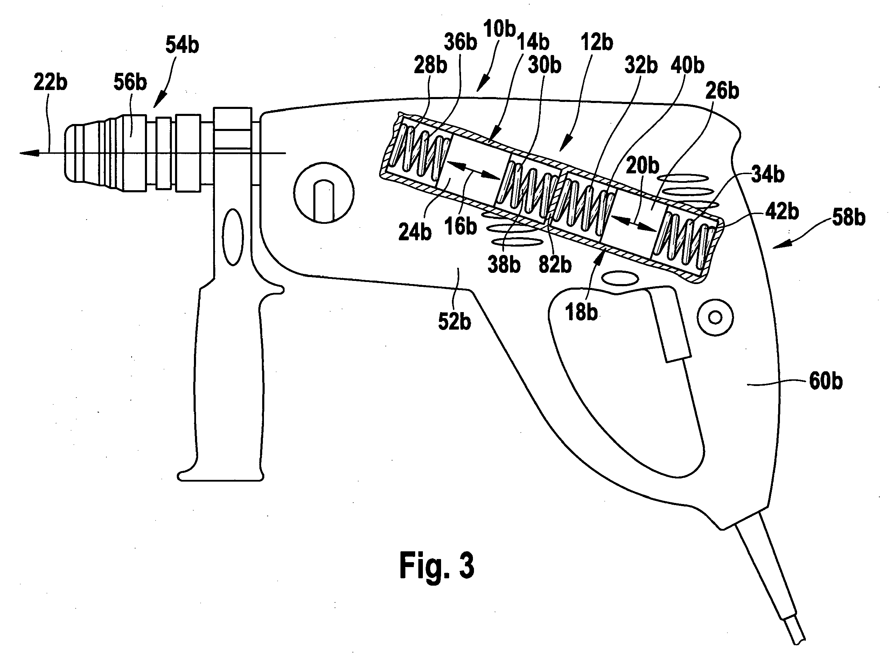

In Figur 3 ist ein alternatives Ausführungsbeispiel dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a und b hinzugefügt. Die nachfolgende Beschreibung beschränkt sich im Wesentlichen auf die Unterschiede zu dem Ausführungsbeispiel in den Figuren 1 und 2, wobei bezüglich gleich bleibender Bauteile, Merkmale und Funktionen auf die Beschreibung des Ausführungsbeispiels in den Figuren 1 und 2 verwiesen werden kann.

Eine von einem Bohrhammer gebildete Handwerkzeugmaschine 10b weist eine Schwingungsdämpfungseinheit 12b mit einer ersten Tilgermasseneinheit 14b und einer zweiten Tilgermasseneinheit 18b auf. Die beiden Tilgermasseneinheiten 14b, 18b weisen jeweils eine Schwingungsdämpfungsrichtung 16b, 20b auf, wobei eine erste Schwingungsdämpfungsrichtung 16b der ersten Tilgermasseneinheit 14b im Wesentlichen parallel zu einer zweiten Schwingungsdämpfungsrichtung 20b der zweiten Tilgermasseneinheit 18b ausgerichtet ist. Die beiden Tilgermasseneinheiten 14b, 18b sind entkoppelt zueinander und entlang der Schwingungsdämpfungsrichtungen 16b, 20b nacheinander angeordnet. Die Tilgermassenelemente 24b, 26b sind ferner bezüglich einer von einer Schlagrichtung gebildeten Arbeitsrichtung 22b der Handwerkzeugmaschine 10b schräg ausgerichtet, so dass die beiden Schwingungsdämpfungsrichtungen 16b, 20b zu der Arbeitsrichtung 22b einen Winkel von ungleich null einschließen.

## Patentansprüche

1. Handwerkzeugmaschine, insbesondere Bohr- und/oder Meißelhammer, mit einer Schwingungsdämpfungseinheit (12a; 12b), die eine erste Tilgermasseneinheit (14a; 14b) mit einer ersten Schwingungsdämpfungsrichtung (16a; 16b) und zumindest eine zweite Tilgermasseneinheit (18a; 18b) mit einer zweiten Schwingungsdämpfugsrichtung (20a; 20b) aufweist, wobei die erste Schwingungsdämpfungsrichtung (16a; 16b) der ersten Tilgermassencinheit (14a; 14b) im Wesentlichen parallel zur zweiten Schwingungsdämpfungsrichtung (20a; 20b) der zweiten Tilgermasseneiheit (18a; 18b) ausgerichtet ist. wobei eine Schwingungseigenfrequenz der ersten Tilgermasseneinheit (14a; 14b) unterschiedlich zu einer Schwingungseigenfrequenz der zweiten Tilgermasseneinheit (18a; 18b) Ausgebildet ist und **dadurch gekennzeichnet, dass** die zumindest zwei Tilgermasseneinheiten (14a, 18a; 14b, 18b) entlang einer Schwingungsdämpfungsrichtung (16a, 20a; 16b, 20b) nacheinander angeordnet sind.

2. Handwerkzeugmaschine nach Anspruch 1, **dadurch gekennzeichnet, dass** die beiden Schwingungseigenfrequenzen der Tilgermasseneinheiten (14a, 18a; 14b, 18b) eine Differenz von maximal 15 % aufweisen.

3. Handwerkzeugmaschine nach Anspruch 1 oder 2, **dadurch gekennzeichnet, dass** die beiden Schwingungseigenfrequenzen der Tilgermasseneinheiten (14a, 18a; 14b, 18b) eine Differenz von maximal 10 % aufweisen.

4. Handwerkzeugmaschine nach einem der vorhergehenden Ansprüche, **dadurch gekennzeichnet, dass** die beiden Schwingungseigenfrequenzen der Tilgermasseneinheiten (14a, 18a; 14b, 18b) eine Differenz von maximal 5 % aufweisen.

5. Handwerkzeugmaschine nach einem der vorhergehenden Ansprüche, **dadurch gekennzeichnet, dass** die zumindest zwei Tilgermasseneinheiten (14a, 18a; 14b, 18b) entkoppelt zueinander angeordnet sind.

6. Handwerkzeugmaschine nach einem der vorhergehenden Ansprüche, **dadurch gekennzeichnet, dass** die Schwingungsdämpfungsrichtung (16a, 20a) zumindest einer Tilgermasseneinheit (14a, 18a) im Wesentlichen parallel zu einer Arbeitsrichtung (22a) aufgerichtet ist.

7. Handwerkzeugmaschine nach einem der vorhergehenden Ansprüche, **dadurch gekennzeichnet, dass** zumindest eine der Tilgermasseneinheiten (14a, 18a; 14b, 18b) zumindest ein Tilgermassenelement (24a, 26a; 24b, 26b) und zwei elastische Elemente (28a, 30a, 32a, 34a; 28b, 30b, 32b, 34b) aufweist und das Tilgermassenelement (24a, 26a; 24b, 26b) entlang der Schwingungsdämpfungsrichtung (16a, 20a; 16b, 20b) zumindest teilweise zwischen den zwei elastischen Elementen (28a, 30a, 32a, 34a; 28b, 30b, 32b, 34b) angeordnet ist.

8. Handwerkzeugmaschine zumindest nach Anspruch 7, **dadurch gekennzeichnet, dass** zumindest ein elastisches Element (28a, 30a, 32a, 34a; 28b, 30b, 32b, 34b) von einem Federelement (36a, 38a, 40a, 42a; 36b, 38b, 40b, 42b) gebildet ist.

9. Handwerkzeugmaschine nach einem der vorhergehenden Ansprüche, **dadurch gekennzeichnet, dass** zumindest eine der zumindest zwei Tilgermasseneinheiten (14a, 18a; 14b, 18b) zum indest ein Führungselement (44a, 46a, 48a, 50a; 44b, 46b, 48b, 50b) zu einer Führung eines Tilgermassenelements (24a, 26a; 24b, 26h) entlang einer Schwingungsdämpfungsrichtung (16a, 20a; 16b, 20b) aufweist.

## Claims

1. Portable power tool, in particular rotary and/or demolition hammer, having a vibration damping unit (12a; 12b), which has a first absorption mass unit (14a; 14b) having a first vibration damping direction (16a; 16b) and at least one second absorption mass unit (18a; 18b) having a second vibration damping direction (20a; 20b), wherein the first vibration damping direction (16a; 16b) of the first absorption mass unit (14a; 14b) is oriented substantially parallel to the second vibration damping direction (20a; 20b) of the second absorption mass unit (18a; 18b), wherein a natural vibration frequency of the first absorption mass unit (14a; 14b) is configured to be different from a natural vibration frequency of the second absorption mass unit (18a; 18b), and **characterized in that** the at least two absorption mass units (14a, 18a; 14b, 18b) are arranged in succession in a vibration damping direction (16a, 20a; 16b, 20b).

2. Portable power tool according to Claim 1, **characterized in that** the two natural vibration frequencies of the absorption mass units (14a, 18a; 14b, 18b) have a difference of at most 15%.

3. Portable power tool according to Claim 1 or 2, **characterized in that** the two natural vibration frequencies of the absorption mass units (14a, 18a; 14b, 18b) have a difference of at most 10%.

4. Portable power tool according to one of the preceding claims, **characterized in that** the two natural vibration frequencies of the absorption mass units (14a, 18a; 14b, 18b) have a difference of at most 5%.

5. Portable power tool according to one of the preceding claims, **characterized in that** the at least two absorption mass units (14a, 18a; 14b, 18b) are arranged in a decoupled manner with respect to one another.

6. Portable power tool according to one of the preceding claims, **characterized in that** the vibration damping direction (16a, 20a) of at least one absorption mass unit (14a, 18a) is oriented substantially parallel to a working direction (22a).

7. Portable power tool according to one of the preceding claims, **characterized in that** at least one of the absorption mass units (14a, 18a; 14b, 18b) has at least one absorption mass element (24a, 26a; 24b, 26b) and two elastic elements (28a, 30a, 32a, 34a; 28b, 30b, 32b, 34b) and the absorption mass element (24a, 26a; 24b, 26b) is arranged at least partially between the two elastic elements (28a, 30a, 32a, 34a; 28b, 30b, 32b, 34b) in the vibration damping direction (16a, 20a; 16b, 20b).

8. Portable power tool at least according to Claim 7, **characterized in that** at least one elastic element (28a, 30a, 32a, 34a; 28b, 30b, 32b, 34b) is formed by a spring element (36a, 38a, 40a, 42a; 36b, 38b, 40b, 42b).

9. Portable power tool according to one of the preceding claims, **characterized in that** at least one of the at least two absorption mass units (14a, 18a; 14b, 18b) has at least one guide element (44a, 46a, 48a, 50a; 44b, 46b, 48b, 50b) for guiding an absorption mass element (24a, 26a; 24b, 26b) in a vibration damping direction (16a, 20a; 16b, 20b).

## Revendications

1. Machine-outil à main, en particulier marteau perforateur et/ou marteau-piqueur, comprenant une unité d'amortissement des vibrations (12a ; 12b) qui présente une première unité de masse d'amortissement (14a ; 14b) ayant une première direction d'amortissement des vibrations (16a ; 16b) et au moins une deuxième unité de masse d'amortissement (18a ; 18b) ayant une deuxième direction d'amortissement des vibrations (20a ; 20b), la première direction d'amortissement des vibrations (16a ; 16b) de la première unité de masse d'amortissement (14a ; 14b) étant orientée essentiellement parallèlement à la deuxième direction d'amortissement des vibrations (20a ; 20b) de la deuxième unité de masse d'amortissement (18a ; 18b), une fréquence propre de vibration de la première unité de masse d'amortissement (14a ; 14b) étant réalisée de manière différente d'une fréquence propre d'amortissement de la deuxième unité de masse d'amortissement (18a ; 18b) et **caractérisée en ce que** les au moins deux unités de masse d'amortissement (14a, 18a ; 14b, 18b) sont disposées l'une après l'autre le long d'une direction d'amortissement des vibrations (16a, 20a ; 16b, 20b).

2. Machine-outil à main selon la revendication 1, **caractérisée en ce que** les deux fréquences propres de vibration des unités de masse d'amortissement (14a, 18a ; 14b, 18b) présentent une différence de 15 % maximum.

3. Machine-outil à main selon la revendication 1 ou 2, **caractérisée en ce que** les deux fréquences propres de vibration des unités de masse d'amortissement (14a, 18a ; 14b, 18b) présentent une différence de 10 % maximum.

4. Machine-outil à main selon l'une quelconque des revendications précédentes, **caractérisée en ce que** les deux fréquences propres de vibration des unités de masse d'amortissement (14a, 18a ; 14b, 18b) présentent une différence de 5 % maximum.

5. Machine-outil à main selon l'une quelconque des revendications précédentes, **caractérisée en ce que** les au moins deux unités de masse d'amortissement (14a, 18a ; 14b, 18b) sont disposées de manière désaccouplée les unes des autres.

6. Machine-outil à main selon l'une quelconque des revendications précédentes, **caractérisée en ce que** la direction d'amortissement des vibrations (16a, 20a) d'au moins une unité de masse d'amortissement (14a, 18a) est orientée essentiellement parallèlement à une direction de travail (22a).

7. Machine-outil à main selon l'une quelconque des revendications précédentes, **caractérisée en ce qu'**au moins l'une des unités de masse d'amortissement (14a, 18a ; 14b, 18b) présente au moins un élément de masse d'amortissement (24a, 26a ; 24b, 26b) et deux éléments élastiques (28a, 30a, 32a, 34a ; 28b, 30b, 32b, 34b) et l'élément de masse d'amortissement (24a, 26a ; 24b, 26b) est disposé le long de la direction d'amortissement des vibrations (16a, 20a ; 16b, 20b) au moins en partie entre les deux éléments élastiques (28a, 30a, 32a, 34a ; 28b, 30b, 32b, 34b).

8. Machine-outil à main selon au moins la revendication 7, **caractérisée en ce qu'**au moins un élément élastique (28a, 30a, 32a, 34a ; 28b, 30b, 32b, 34b) est formé par un élément de ressort (36a, 38a, 40a, 42a ; 36b, 38b, 40b, 42b).

9. Machine-outil à main selon l'une quelconque des revendications précédentes, **caractérisée en ce qu'**au moins l'une des au moins deux unités de masse d'amortissement (14a, 18a ; 14b, 18b) présente au moins un élément de guidage (44a, 46a, 48a, 50a ; 44b, 46b, 48b, 50b) pour un guidage d'un élément de masse d'amortissement (24a, 26a ; 24b, 26b) le long d'une direction d'amortissement des vibrations (16a, 20a ; 16b, 20b).
